Europäisches Patentamt

European Patent Office

Office européen des brevets

(19)

(11) EP 0 827 778 A2

(12) EUROPÄISCHE PATENTANMELDUNG

(43) Veröffentlichungstag:
11.03.1998  Patentblatt 1998/11

(51) Int. Cl.⁶: B01J 23/30, B01D 53/86,
B01J 37/00, B01J 37/04

(21) Anmeldenummer: 97115256.6

(22) Anmeldetag: 03.09.1997

(84) Benannte Vertragsstaaten:
AT BE CH DE DK ES FI FR GB GR IE IT LI LU MC
NL PT SE
Benannte Erstreckungsstaaten:
AL LT LV RO SI

(30) Priorität: 04.09.1996 DE 19635893

(71) Anmelder:
BASF AKTIENGESELLSCHAFT
67056 Ludwigshafen (DE)

(72) Erfinder:
• Morsbach, Bernd
67069 Ludwigshafen (DE)
• Hesse, Michael
67549 Worms (DE)

(74) Vertreter:
Isenbruck, Günter, Dr.
Patent- und Rechtsanwälte Bardehle-
Pagenberg-Dost-Altenburg-Frohwitter-Geissler
& Partner
Theodor-Heuss-Anlage 12
68165 Mannheim (DE)

(54) Katalysatorzusammensetzung und Verfahren zur selektiven Reduktion von NOx in sauerstoffhaltigen Verbrennungsabgasen

(57)     Die Katalysatorzusammensetzung zur Reduktion von $NO_x$ bei gleichzeitiger weitgehender Vermeidung der Oxidation von $SO_x$ in einem sauerstoffhaltigen Verbrennungsabgas enthält $TiO_2$, $WO_3$ und $V_2O_5$, wobei die Zusammensetzung eine zumindest bimodale Porengrößenverteilung im Bereich von 5 bis 30 nm und 45 bis 100 nm aufweist und das $V_2O_5$ überwiegend auf die größeren Poren der zumindest bimodalen Porengrößenverteilung verteilt ist.

FIG.1

EP 0 827 778 A2

**Beschreibung**

Die Erfindung betrifft eine Katalysatorzusammensetzung und ein Verfahren zur selektiven Reduktion von $NO_x$ bei gleichzeitiger weitgehender Vermeidung der Oxidation von $SO_x$ in sauerstoffhaltigen Verbrennungsabgasen. Insbesondere betrifft die Erfindung einen Katalysator auf Basis der Oxide von Ti, W und V zur Reduktion von $NO_x$ mittels Ammoniak als Reduktionsmittel. Ferner betrifft die Erfindung ein Verfahren zur Herstellung dieses Katalysators.

Verbrennungsabgase, wie aus Verbrennungsanlagen für fossile oder biologische Brennstoffe bzw. Abfälle, oder von Verbrennungskraftmaschinen wie Automotoren, insbesondere von Dieselmotoren, enthalten Schadstoffe wie Stickoxide. Es sind viele den von Katalysatoren bekannt, die Stickoxide mittels Ammoniak oder ammoniakabgebender Stoffe reduzieren. Die Reduktion läuft dabei wahrscheinlich nach folgenden Umsetzungsgleichungen ab:

$$4\ NO + 4\ NH_3 + O_2 \rightarrow 4\ N_2 + 6\ H_2O$$

$$NO + NO_2 + 2\ NH_3 \rightarrow 2\ N_2 + 3\ H_2O$$

$$2\ NO_2 + 4\ NH_3 + O_2 \rightarrow 3\ N_2 + 6\ H_2O$$

Der Sauerstoff ist, da üblicherweise mit Luftüberschuß gefahren wird, im Abgas unmittelbar vorhanden. Ammoniak wird dem Abgas zugeführt. Die genannten Reaktionen benötigen bei den praktizierten Temperaturen von beispielsweise 150 bis 550 °C einen Katalysator zur Beschleunigung der Reaktion. Dieser soll aber gleichzeitig möglichst nicht die Oxidation des ebenfalls anwesenden Schwefeldioxids fördern. Denn dabei bildet sich Schwefeltrioxid, aus dem sich mit dem ebenfalls vorhandenen Wasserdampf hochkorrosive Schwefelsäure bilden würde.

Derartige Katalysatoren müssen außerdem einfach herzstellen sein, ihre Aktivität über sehr lange Zeit unverändert beibehalten, einen geringen Abrieb aufweisen und außerdem muß die Emission von Ammoniak, der sogenannte Ammoniakschlupf, gering sein.

Aus EP-A 0 653 243 ist es bekannt, einen Trägerkatalysator mit bi- oder trimodaler Porengrößenverteilung mittels eines organischen Polymers herzustellen. Beispielhaft wird aufgezeigt, daß dieser auf Aluminiumoxid basierende Katalysator für Hydrierungen ungesättigter organischer Verbindungen, vor allem solcher in der Flüssigphase, geeignet ist.

Aus EP-A 0 516 262 ist ein Katalysator mit bimodaler Porengrößenverteilung von weniger als 60 nm und mehr als 60 nm, bevorzugt von 60 bis 10.000 nm, bekannt. Dieser Katalysator wird zwar zur Reduzierung von $NO_x$ eingesetzt, die Oxidation von $SO_x$ wird mit diesem Katalysator allerdings nicht vermieden.

In JP-A 60-248 237 wird ein Katalysator beschrieben, der wasserabsorbierendes Harz als Hilfe beim Formen einsetzt.

In DE-A 34 33 197 wird ein Verfahren zur Herstellung einer Katalysatorstruktur zur Reduktion von Stickoxiden beschrieben, bei der eine Vormischung in eine Lösung getaucht wird, die ein katalytisch aktives Mittel enthält.

In EP-A 0 256 359 wird ein Katalysator auf $TiO_2$-Basis beschrieben, der eine bimodale Porenstruktur im Bereich von 10 bis 100 nm und 100 bis 12.000 nm aufweisen kann.

Es ist daher eine Aufgabe der vorliegenden Erfindung, eine Katalysatorzusammensetzung bereitzustellen, mit der in einem sauerstoffhaltigen Verbrennungsgas ein hoher Umsatz an $NO_x$-Reduktion bei gleichzeitig geringem Umsatz an $SO_x$-Oxidation erreicht werden kann.

Eine weitere Aufgabe der Erfindung ist es, ein Verfahren zur Herstellung dieses Katalysators anzugeben, der eine gute Festigkeit aufweist und eine gleichbleibende Aktivität über eine lange Standzeit hat.

Darüber hinaus wird eine Aufgabe der vorliegenden Erfindung darin gesehen, ein Verfahren zur selektiven Reduzierung von $NO_x$ bei gleichzeitiger weitgehender Vermeidung von Oxidation von $SO_x$ in sauerstoffhaltigen Verbrennungsabgasen bereitzustellen.

Eine Lösung der Aufgabe ist eine Katalysatorzusammensetzung zur Reduktion von $NO_x$ bei gleichzeitiger weitgehender Vermeidung der Oxidation von $SO_x$ in einem sauerstoffhaltigen Verbrennungsabgas, die $TiO_2$ und $WO_3$ und $V_2O_5$ enthält, die eine zumindest bimodale Porengrößenverteilung in den Bereichen von 5 bis 30 nm und 45 bis 100 nm aufweist, und in der das $V_2O_5$ überwiegend auf die größeren Poren der zumindest bimodalen Porengrößenverteilung verteilt ist.

Bei den bevorzugten Katalysatorzusammensetzungen mit bimodaler Porengrößenverteilung haben diese ausgeprägte Maxima in den obigen Bereichen. Die Porengrößeverteilung liegt insbesondere in den Bereichen von 10 bis 30 nm und 50 bis 100 nm. Darunter ist insbesondere zu verstehen, daß jeweils mehr als 80% des gemessenen Porenvolumens in den angegebenen Bereichen liegt, bevorzugt mehr als 90%

Es ist nun überraschend gefunden worden, daß eine Katalysatorzusammensetzung auf der Basis der Oxide von Ti, W und V mit dieser speziellen Porengrößenverteilung nicht nur zur Reduktion von $NO_x$ führt, sondern darüber hinaus gleichzeitig auch die Oxidation von $SO_x$ trotz vorhandenem Sauerstoff in dem zu behandelnden Verbrennungsabgas weitgehend vermeidet. Dieser Effekt war nicht zu erwarten, denn weder die Bimodalität noch die

2

Zusammensetzung, noch die Verteilungsmethode mittels des organischen Polymeren (siehe weiter unten) oder die Verteilungscharakteristik der aktiven Komponente $V_2O_5$ ließ die Trägheit gegenüber $SO_x$ und die gleichzeitig hohe Aktivität gegenüber $NO_x$ voraussehen. Ein solcher Katalysator beziehungsweise eine solche Katalysatorzusammensetzung ist hervorragend geeignet zur Reduktion des $NO_x$ mittels Ammoniak zu Stickstoff, wobei das $SO_x$ kann oxidiert wird und der Katalysator eine gute Festigkeit und gleichbleibende Aktivität über eine lange Standzeit hat.

Als Vorläufersubstanzen für das $V_2O_5$ kommen bevorzugt beispielsweise das Vanadiummetavanadat, Vanadylsulfat, Vanadiumoxalat bzw. alle löslichen Vanadiumsalze in Betracht, die beim Brennen in $V_2O_5$ übergehen.

Bei dieser speziellen Porenverteilung wird möglicherweise die Diffusionskinetik so modifiziert, daß das $NO_x$ bevorzugt reduziert wird, während die Oxidation des $SO_x$ weitgehend unterbunden wird. Das $V_2O_5$ wird mittels des organischen Polymeren (siehe weiter unten) in die größeren Poren der Porenverteilung eingebracht, um nun in diesen größeren Poren für die diffusionskontrollierte Reaktion zur Verfügung zu stehen. Ein Erklärungsversuch für diese Wirkung könnte sein, daß wenn das $V_2O_5$ in den kleineren Poren eingebracht wäre, es für die Reaktionspartner schlechter zu erreichen sein würde, was zu einer niedrigen Aktivität und Selektivität führen würde, da wahrscheinlich bevorzugt in den Mikroporen unerwünschte Folgereaktionen ablaufen. Wenn bei gleicher Gesamtporosität der Durchmesser und der Anteil der Makroporen größer gewählt würde, wäre es plausibel, von folgendem auszugehen: Die mechanische Stabilität ginge zurück, weil das Gerüst mehr Löcher bekäme. Wenn der Katalysator zusammenbricht geht auch die Aktivität zurück; Die katalytische Oberfläche würde kleiner, wodurch der Umsatz bei gegebenem Katalysatorvolumen und Gasdurchsatz geringer würde, d.h. die DeNO$_x$-Aktivität ginge zurück. Dieser Erklärungsversuch der überraschenden Wirkung des erfindungsgemäßen Katalysators stellt dabei allerdings keine Beschränkung des Gegenstandes der Erfindung dar.

In einem weiteren bevorzugten Ausführungsbeispiel der vorliegenden Erfindung ist eine Katalysatorzusammensetzung vorgesehen, bei der das $V_2O_5$ zu mindestens 50%, bevorzugt zu mindestens 60%, auf die größeren Poren der bimodalen Porengrößenverteilung verteilt ist. Durch die Verteilung des $V_2O_5$ auf die größeren Poren werden die gewünschten Reaktionspartner bei der diffusionsgesteuerten Reaktion besonders vorteilhaft in die Lage versetzt, mit dem katalytisch aktiven $V_2O_5$ in Berührung zu kommen und reagieren zu können. Bevorzugt ist das $V_2O_5$ zu 65%, insbesondere zu 70%, besonders bevorzugt zu 85% oder mehr, auf die größeren Poren der bimodalen Porengrößenverteilung verteilt. Die Prozentangaben beziehen sich auf die Gesamtmenge des eingesetzten $V_2O_5$.

Darüber hinaus wurde gefunden, daß in einer weiteren bevorzugten Ausführungsform der erfindungsgemäßen Katalysatorzusammensetzung zusätzlich die Oxide von Mo, Fe, Sn, Mn, Cu, Co, Cr, Zn, Ce oder eine Kombination dieser weiteren katalytisch aktiven Komponenten m der Katalysatorzusammensetzung enthalten sein können. Durch den Einsatz dieser weiteren bekannten Komponenten kann die Katalysatorzusammensetzung Speziellen herstellungstechnischen Anforderungen genügen oder für definierte Anwendungsbereiche konfektioniert werden.

In einer weiteren bevorzugten Ausführungsform kann das $TiO_2$ teilweise durch due Oxide des Si, Al, Zr und/oder Mg ersetzt sein. Auf diese Weise ist es möglich, billigere Ausgangsstoffe zu verwenden und den Katalysator kostengünstiger zu produzieren. Außerdem kann auf produktionstechnische Anforderungen und spezielle Anwendungsgebiete eingegangen werden.

Bei dem Verfahren zur Herstellung der erfindungsgemäßen Katalysatorzusammensetzung ist das organische Polymer bevorzugt ein stark quellendes Acrylatharz, insbesondere eine teilweise neutralisierte vernetzte Polyacrylsäure, insbesondere ein Ammoniumsalz der Polyacrylsäure. Das organische Polymer ist bevorzugt in der Lage, mindestens das Zehnfache seines Eigengewichts an Wasser zu binden. Solche Verbindungen werden als Hydrogele bezeichnet (vgl. B.D. Rathmer et al. in "Hydrogels for Medical and related Applications", ACS Symposium Series No. 31 (1976)). Es handelt sich hierbei um vernetzte polymere Verbindungen, wobei die Vernetzung durch ionische Wechselwirkungen oder Wasserstoffbrückenbindungen sowie durch chemische Vernetzung erfolgen kann. Es kommen z.B. Pfropfcopolymerisate aus Stärke und Acrylnitril (z.B. G.F. Fanta et al. in Starch _34_ (1982) 95), Stärke und Acrylsäure (EP-A-0 083 022), Polysacchariden und Acrylsäure (DE-A 41 05 000), Copolymerisate aus Acrylamid und Acrylsäure (EP-A-0 072 214), vernetztes Polyethylenoxid (US-A 3,264,202), vernetztes Polyacrylamid (US-A 3,669,103), vernetztes Poly-N-vinylpyrrolidon (US-A 3,669,103), vernetzte Polyvinylalkohole (Walter et al., Biomaterials _9_ (1988) 150), vernetzte Carboxymethylcellulosefasern (US-A 3,826, 711), Hydrolysate von Polyvinylacetat-Acrylsäure-Copolymerisaten (GB-A 20 30 990) und Hydrolysate von Polyacrylnitril (US-A 4,366,206) in Betracht.

Bevorzugt werden vernetzte Polymere bzw. Copolymere aus Acrylsäure, Acrylsäure und Acrylamid sowie aus Acrylamid. Besonders bevorzugt sind teilweise neutralisierte Ammoniumpolyacrylate, die schwach vernetzt sind. Als chemische Vernetzer kommen beispielsweise Diole wie Ethylenglykol, Polyethylenglykol und Polyole, Diamine, Diene in Mengen von 0,1 bis 5 Gew.-%, bezogen auf das Polymer, in Frage. Solche Polymere können bis zum 1.000fachen ihres Eigengewichts an Wasser binden. Sie werden üblicherweise durch radikalische Polymerisation in wäßriger Lösung hergestellt und sind als Verdickungsmittel oder als sogenannte Superabsorber im Handel erhältlich (F.L. Buchholz, "Preparation and Structure of Polyacrylates" in Absorbent Polymer Technology, Studies in Polymer Science _8_, Elzevier, Amsterdam 1990, S. 23).

Besonders bevorzugt wird ein Ammoniumpolyacrylat eingesetzt, das als Lutexal[®] P von der BASF AG, Ludwigshafen, vertrieben wird.

Bevorzugt werden die Komponenten bei der Herstellung der erfindungsgemäßen Katalysatorzusammensetzung zusätzlich versetzt mit:

- Zusatzstoffen zur Gerüstbildung wie Ton, insbesondere alkalifreier Ton, Schichtsilikate wie Montmorillonit oder Kaolin, Porzellanerde, Fuller-Erde, Bentonit und/oder Pyrophillit, und/oder

- Zusatzstoffen zur Stabilitätsverbesserung wie Glasfasern, mineralische Fasern, Steinwolle, und/oder

- Zusatzstoffen als Gleitmittel zur Extrusionsverbesserung, insbesondere Polyethylenoxid, Polyethylenglykole verschiedener Molekulargewichte, Polyacrylate, Polyvinylalkohol, Polyvinylacetat, Carboxymethylcellulose (CMC), Alkydharze, Harnstoff-Harze, Melamin-Harze und/oder Phenolharze sowie deren Mischungen oder Mischkondensationsprodukte.

Solche Stoffe dienen bevorzugt zuerst der Bildung eines Gerüstes bzw. einer Matrix, die durch Stabilisatoren zusätzlich gefestigt wird. Darüber hinaus ist es bei der Verarbeitung der Komponenten der späteren Katalysatorzusammensetzung vorteilhaft, wenn sie beim Formen extrudiert werden kann, wofür die Gleitmittel vorteilhaft eingesetzt werden können. Einzelne Stoffe können auch verschiedenen Zwecken dienen, so ist beispielsweise das Montmorillonit als Ton grundsätzlich (nach dem Brennen) als Gerüstbildner geeignet, wirkt aber gleichzeitig auch vorteilhaft (im nassen Zustand) als Gleitmittel.

Besonders bevorzugt enthält eine erfindungsgemäße Katalysatorzusammensetzung nach dem Trocknen und Calcinieren: 75 bis 85 Gew.-%, besonders bevorzugt etwa 81 Gew.-%, $TiO_2$; 3 bis 15 Gew.-%, besonders bevorzugt etwa 9 Gew.-%, $WO_3$; 2 bis 8 Gew.-%, besonders bevorzugt etwa 5,3 Gew.-%, Glasfasern; 2 bis 10 Gew.-%, besonders bevorzugt etwa 4,5 Gew.-%, Ton, und 0,1 bis 5 Gew.-%, besonders bevorzugt 0,3 bis 3 Gew.-%, insbesondere etwa 0,5 Gew.-%, $V_2O_5$. Die Summe der Anteile der Komponenten beträgt 100 Gew.-%. In dieser Zusammensetzung wird ein Katalysator gewonnen, der hervorragend zur Reduzierung des $NO_x$ mittels Ammoniak zu Stickstoff geeignet ist, wobei das $SO_x$ kaum oxidiert wird und der Katalysator eine gute Festigkeit und gleichbleibende Aktivität über eine lange Standzeit hat.

Das Verfahren zur Herstellung einer erfindungsgemäßen Katalysatorzusammensetzung umfaßt folgende Schritte:

a) Kneten/Vermischen des $TiO_2$, $WO_3$ und gegebenenfalls von Zusatzstoffen
b) Lösen des $V_2O_5$ oder einer Vorläuferverbindung in einem Lösungsmittel,
c) Versetzen der so erhaltenen Lösung mit dem organischen Polymeren,
d) Vermischen der mit dem Polymeren versetzten Lösung aus c) mit dem Gemisch aus a),
e) Formen der so erhaltenen Masse, Trocknen und Calcinieren.

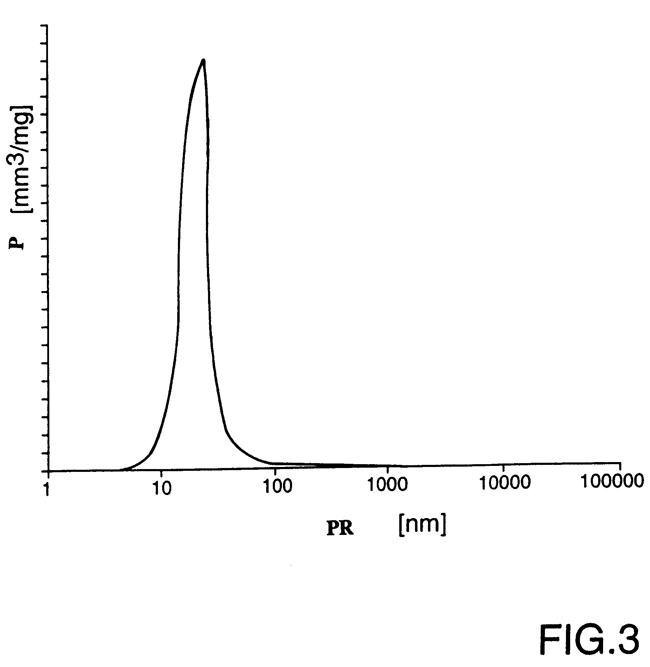

Bei diesem Verfahren wird in einer bevorzugten Ausführungsform im Schritt c) $NH_4VO_3$ (Ammoniummetavandat) mit der mehrfachen, insbesondere 10- bis 20-fachen, besonders bevorzugt 15-fachen, Menge des organischen Polymeren vermischt, das mit der mehrfachen, insbesondere der bis zu 10-fachen Menge Wasser vorgequollen worden ist. Bevorzugt kann durch den Einsatz von Säuren wie Milchsäure, Oxalsäure, Aminoessigsäure, allgemein Fettsäuren oder anderen organischen Säuren der pH-Wert eingestellt werden. Der pH-Wert sollte beim Quellen der Polyacrylate als organischen Polymeren im Schritt c) mindestens 6 betragen, da andernfalls nur eine unzureichende Lösungsmittelaufnahme erfolgt. Beim erfindungsgemäßen Verfahren werden zur Herstellung der erfindungsgemäßen Katalysatorzusammensetzung 3,5 bis 8 Gew.-%, bevorzugt 4 bis 6 Gew.-% , besonders bevorzugt etwa 5 Gew.-% des organischen Polymers bezogen auf die mineralische Masse (Menge an mineralischen Anteilen) eingesetzt. Hierdurch kann die gewünschte Porenverteilung erreicht werden. Wenn zuwenig des organischen Polymeren eingesetzt wird, dann wird eine Bimodalität in der Porenverteilung unter Umständen nicht erreicht und die $SO_x$-Oxidation nicht erfolgreich unterbunden (siehe als Vergleich das Beispiel des in Fig. 3 verwendeten Katalysators, bei dem bei Verwendung von nur 2,5 Gew.-% Polymer der $SO_2$-Umsatz um den Faktor 1,76 höher liegt und keine Bimodalität erreicht wurde).

Im ersten Verfahrensschritt werden das $TiO_2$ und das $WO_3$ zu vorher festgelegten Teilen miteinander vermischt. Diese Komponenten liegen vorteilhafterweise in Pulverform vor. Zusätzlich können ggf. Zusatzstoffe mit hineinvermengt werden. Als Zusatzstoffe (bzw. Trägermaterialien) kommen unter den Reaktionsbedingungen der zu katalysierenden Reaktion inerte Verbindungen in Betracht, bevorzugt Aluminiumoxide, Siliciumdioxid, Kieselgur, Kieselgel, Tonerden, z.B. Montmorillonite, Silikate, Zeolithe im Gemisch mit Aluminiumoxid, Zirkoniumoxide, Titanoxide sowie Gemische dieser Verbindungen untereinander, von denen Aluminiumoxid und Siliciumoxid besonders bevorzugt sind. Weiterhin können auch Oxide von Magnesium, Calcium, Strontium, Barium, Sulfate von Calcium, Barium, Strontium, Blei, Carbonate von Magnesium, Calcium, Strontium, Barium, Nickel, Kobalt, Mangan, Eisen, Kupfer, Sulfide von Molybdän, Wolfram, Kobalt, Nickel, Eisen, Blei, Silber, Chrom, Kupfer, Cadmium, Zinn, Carbide von Bor, Silicium und Wolfram verwendet werden. Die Komponenten werden vermischt, wozu Kneter oder Mix-Muller benutzt werden können.

Das $V_2O_5$ oder dessen Vorläuferverbindung wird in einem Lösungsmittel gelöst oder fein dispergiert. Bevorzugt handelt es sich bei dem Lösungsmittel um polare, mit Wasser mischbare Lösungsmittel wie Alkohole, Ether und Amine. Als Alkohole sind besonders $C_1$-$C_4$-Alkanole wie Methanol, Ethanol, iso-Propanol und N-Butanol zu nennen; als Ether kommt z.B. Tetrahydrofuran in Betracht. Bevorzugt werden Amine verwendet wie Ammoniak, Monoamine wie Dimethylamin, Methylamin, Ethanolamin, Trimethylamin, Ethylamin, Propylamin und Butylamin. Besonders bevorzugt wird Wasser oder ein Ammoniak/Wasser-Gemisch.

Soll der Katalysator neben den eigentlichen aktiven Komponenten weiterhin Promotoren oder Moderatoren enthalten, die die katalytische Aktivität oder Selektivität beeinflussen können, ist es zweckmäßig, diese direkt oder ebenfalls in Form ihrer Vorläuferverbindungen der Lösung der Übergangsmetallsalze oder -sole zuzusetzen. Im einzelnen sind als Promotoren oder deren Vorläufer zu nennen: Nitrate, Acetate, Sulfate und Hydroxide der Erdalkalimetalle Magnesium, Calcium, Barium und Strontium, weiterhin Sulfate von Magnesium und Calcium, schließlich deren Carbonate. Außerdem kommen Phosphate wie Natriumphosphat, Arsenate wie Ammonium-, Natrium- und Kaliumarsenat, Bleiverbindungen wie Bleiacetat, Bleichlorid und Bleinitrat, Wismutverbindungen wie Wismutnitrat und Wismutoxychlorid, Zinnverbindungen wie Zinnchlorid oder Alkalimetallstannate sowie Antimonverbindungen wie Ammonium-, Natrium- und Kaliumantimonat. Daraufhin werden die oben beschriebenen Lösungen der aktiven Komponente oder ihrer Vorläuferverbindungen mit dem organischen Polymeren versetzt, wobei entweder die Lösung zum Polymer oder das Polymer zur Lösung gegeben werden kann. Im allgemeinen wird das Polymer mit soviel Lösung der aktiven Komponente versetzt, daß es diese vollständig aufnehmen kann. Dabei quillt das Polymer auf. Dieser Vorgang ist im allgemeinen in 60 Minuten beendet; das Quellen des Polymers wird üblicherweise bei Raumtemperatur vorgenommen. Beim Quellen von Polyacrylaten sollte der pH-Wert mindestens 6 betragen, da andernfalls nur eine unzureichende Lösungsmittelaufnahme erfolgt.

Das gequollene Polymer wird mit den Komponenten aus a) vermischt. Anstatt im Schritt a) das $TiO_2$, $WO_3$ und die Zusatzstoffe vorzumischen, kann die Vermischung der einzelnen Komponenten auch direkt im Schritt d) mit der mit dem Polymeren versetzten Lösung durchgeführt werden. Auch hier werden die Komponenten bevorzugt mit Knetern oder Mix-Mullern vermischt.

Die so erhaltene Masse kann nun geformt werden, beispielsweise durch Extrusion im Extruder oder durch Verformen in einer Strangpresse zu Strängen mit den gewünschten Abmessungen. Die so erhaltenen Formkörper werden getrocknet, wozu in der Regel Temperaturen von 100 bis 150°C über 2 bis 24 Stunden angewendet werden. Anschließend werden die Formkörper bevorzugt über 2 bis 24 Stunden bei 300 bis 800°C, vorzugsweise 300 bis 550°C, calciniert, wobei die Polymeren aus der Matrix entfernt werden und die thermisch labilen Salze der aktiven Komponente, hier z.B. Vanadate, in die Oxide oder Mischoxide (entsprechend $V_2O_5$) überfürt werden. Je nach aktiver Komponente kann sich daran ein Aktivierungsschritt anschließen, wobei die katalytisch aktive Komponente erst gebildet wird. Zwar kann der Trockenschritt auch ausgelassen werden, jedoch hat es sich gezeigt, daß er für eine schonende Beseitigung der zu entfernenden Komponenten vorteilhaft ist.

Die so erhaltenen Katalysatoren bzw. Katalysatorzusammensetzungen können weiterhin in an sich bekannter Weise auf nichtporöse Träger aus beispielsweise Steatit, auf Glasringe, Quarzringe oder hochgesinterte Aluminiumoxid-Ringe aufgebracht werden. Dazu werden in der Regel die nichtporösen Träger mit gemahlenen katalytischen Partikeln sowie einer Granulierflüssigkeit versetzt. Bei dieser Flüssigkeit kann es sich um Aluminiumnitrat-, Aluminiumacetat- oder Aluminiumnatriumhydroxidlösungen handeln, die nach einer Trocknung und Calcinierung der beschichteten nichtporösen Träger Feststoffbrücken zwischen den nichtporösen Trägern und den katalytischen Partikeln bilden. Der Katalysator kann auch in einer unregelmäßigen Schüttung oder als gepackter Festbettkatalysator eingesetzt werden.

Die erfindungsgemäß erzeugten Katalysatoren sind hochporös und weisen ein niedriges Gewicht auf. Durch elektronenmikroskopische Aufnahmen ist erkennbar, daß sich der überwiegende Teil, in der Regel mehr als zwei Drittel, der aktiven Komponente in den Makroporen befindet. Eine Bestimmung des Anteils der Aktivkomponente, der sich in den Makroporen befindet, ist durch die Auswertung von mehreren repräsentativen Schnitten durch den Katalysatorstrang möglich, wobei bei der Rasterelektronenmikroskopie die schwereren Elemente mit Hilfe der Rückstreuelektronen sichtbar gemacht werden.

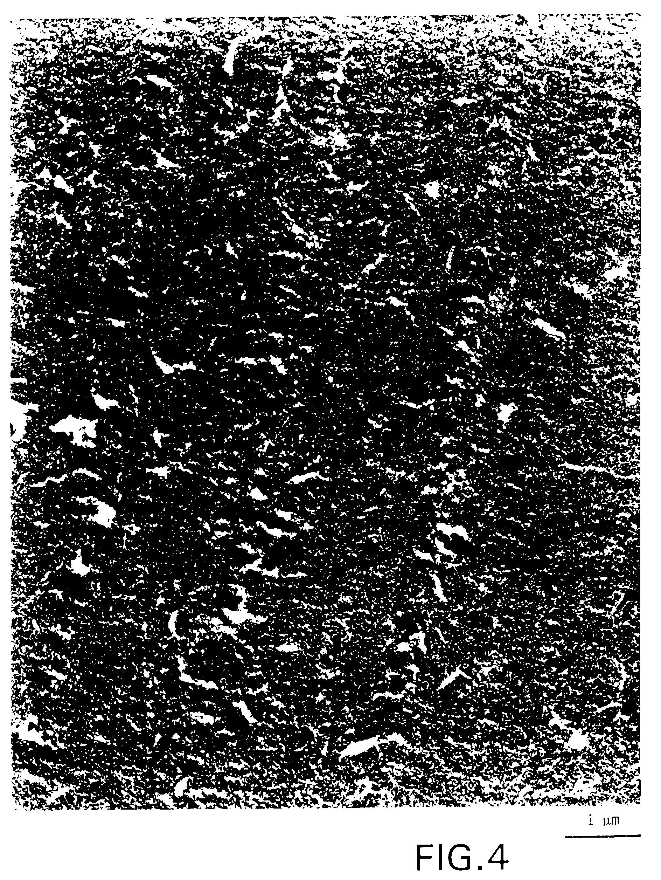

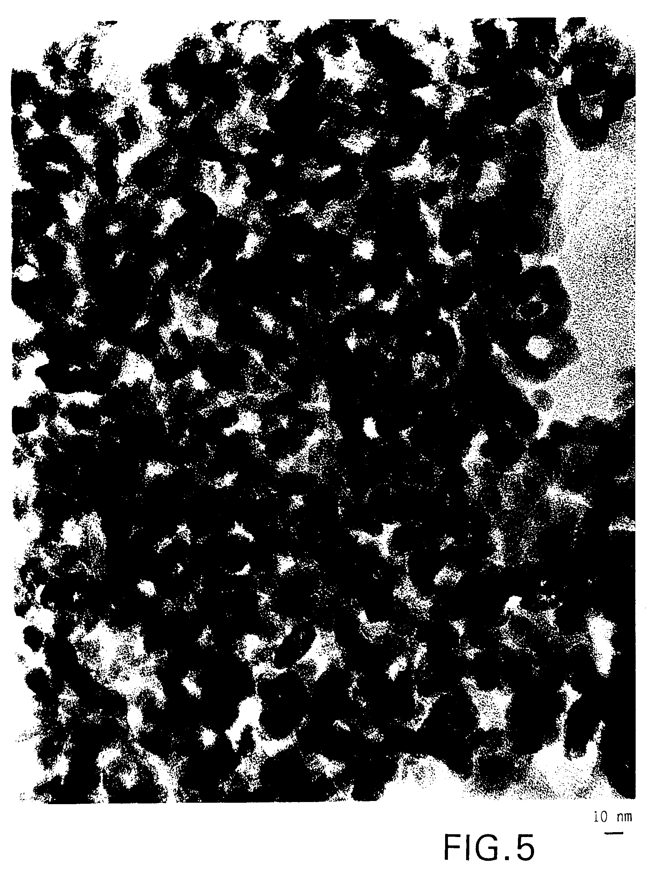

Das $V_2O_5$ ist überwiegend, vorzugsweise im wesentlichen, in dem Bereich großer Poren verteilt, vorzugsweise zu mindestens 60%, bevorzugt zu 70%, besonders bevorzugt zu 85% oder mehr auf die größeren Poren der zumindest bimodalen Porengrößenverteilung. Die Katalysatorzusammensetzung weist bevorzugt eine Struktur auf, die durch die in Fig. 4 und 5 illustrierten elektronenmikroskopischen Aufnahmen gekennzeichnet ist. Das $V_2O_5$ ist praktisch auf porösem $TiO_2$-$WO_3$ vorhanden.

Auf diese Weise wird ein Katalysator gewonnen, der hervorragend zur Reduzierung des $NO_x$ mittels Ammoniak zu Stickstoff geeignet ist, wobei das $SO_x$ kaum oxidiert wird und der Katalysator eine gute Festigkeit und gleichbleibende Aktivität über eine lange Standzeit hat. Das Abgas ist dabei in weiten Grenzen variabel. NO kann von 50 bis 2.000 ppm,

$SO_2$ von 100 bis 3.000 ppm, Sauerstoff von 1 bis 10% variieren. Der $NH_3$-Gehalt wird gemäß den Reaktionsgleichungen darauf eingestellt.

Erfindungsgemäß wird auch ein Verfahren zur Reduktion von $NO_x$ in einem sauerstoffhaltigen Verbrennungsabgas bei gleichzeitiger weitgehender Vermeidung der Oxidation von $SO_x$ bereitgestellt, in dem

das Verbrennungsabgas mit Ammoniak versetzt wird,

das so erhaltene Gemisch mit einer erfindungsgemäßen Katalysatorzusammensetzung oder einer nach dem erfindungsgemäßen Verfahren erhältlichen Katalysatorzusammensetzung in Kontakt gebracht wird. Auf diese Weise kann in einem sauerstoffhaltigen Verbrennungsgas ein hoher Umsatz an $NO_x$-Reduktion bei gleichzeitig geringem Umsatz an $SO_x$-Oxidation erreicht werden, das dann von der Katalysatorzusammensetzung entfernt wird.

Im folgenden werden weitere vorteilhafte Ausgestaltungen und Merkmale der Erfindung anhand von Beispielen und einer genaueren Beschreibung der Figuren noch näher ausgeführt.

Dabei wird auf folgende Diagramme und Darstellungen in den Figuren Bezug genommen. Die Figuren zeigen im einzelnen:

Fig. 1     eine differentielle Verteilungskurve der Porenverteilung eines Ausführungsbeispiels der erfindungsgemäßen Katalysator-zusammensetzung;

Fig. 2     die integrierte Verteilungskurve der Porenverteilung eines Ausführungsbeispiels der erfindungsgemäßen Katalysator-zusammensetzung;

Fig. 3     ein differentielles Verteilungsdiagramm der Porenverteilung eines Vergleichskatalysators mit Einsatz von nur 2,5% Lutexal® P als organischem Polymer;

Fig. 4     eine elektronenmikroskopische Aufnahme eines Querschnitts eines Ausführungsbeispiels der erfindungsgemäßen Katalysatorzusammensetzung, bei der 1 cm 500 nm entspricht; und

Fig. 5     eine elektronenmikroskopische Aufnahme des Querschritts eines Ausführungsbeispiels der erfindungsgemäßen Katalysatorzusammensetzung, bei der 1 cm 20 nm entspricht.

Die Aufnahmen in Fig. 4 und 5 wurden mittels Transmissionselektronenmikroskopie (TEM) erstellt. Die Proben wurden als Ultradünnschnitte nach Einbettung in Kunstharz vorbereitet. Die Vergrößerungen sind jeweils unten rechts angegeben. Die weißen Strukturen sind Bereiche niedrigerer Dichte und stellen Poren dar. Da es sich um Anschnitte verschiedener Lagen der Poren handelt, sind längliche Bereiche als Porenkanäle im Längsschnitt und eher runde Bereiche als Porenkanäle im Querschnitt anzusehen.

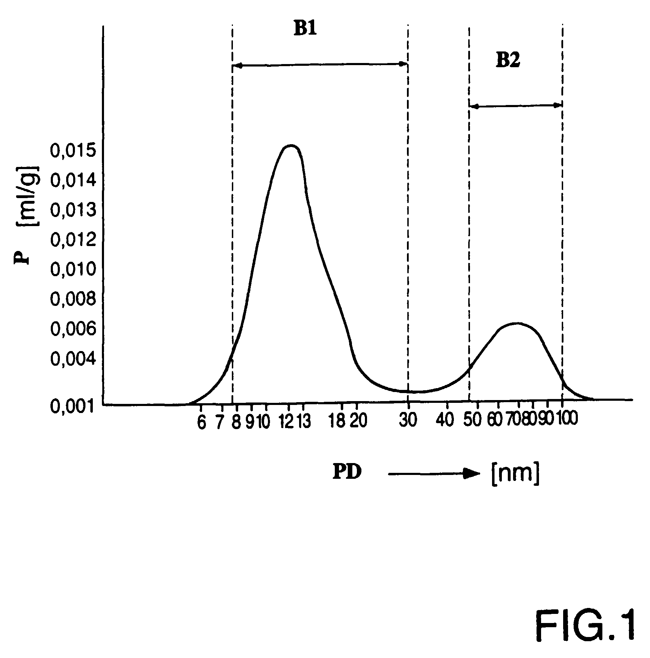

Die Abkürzungen in den Figuren 1 bis 3 bedeuten:

P      = Porosität
PD     = Porendurchmesser
PR     = Porenradius
B1     = Bereich 1 (Mikroporen) von etwa 10 bis 30 nm
B2     = Bereich 2 (Makroporen) von etwa 50 bis 100 nm

## BEISPIELE

### 1. Katalysatorherstellung

1.1 Erfindungsgemäße Katalysator(zusammensetzung)

Der Katalysator wird hergestellt durch dreistündiges Verkneten von 7 kg einer Mischung von Titandioxid und Wolframtrioxid im Gewichtsverhältnis 9:1, 40 g Holzfasern, und 1 l vollentsalztem Wasser mit einem vorgequollenen Ansatz von 337 g Lutexal® P, 376 g einer Ammoniummetavanadatlösung, die umgerechnet 12% Vanadiumpentoxid entspricht, 3,5 l vollentsalztem Wasser und 1,16 l einer 25%igen wäßrigen Ammoniaklösung. Lutexal® P ist ein teilweise neutralisiertes hochquellbares Polyacrylsäureharz von BASF AG, beschrieben z.B. in EP-A 0 653 243. Der Kneter ist auf 70 bis 90 °C beheiz. Nach dieser Knetung werden zu der Masse, die an dieser Stelle des Verfahrens einen Glühverlust von 32% aufweist, noch 2 l vollentsalztes Wasser, 400 g alkalifreier Ton, 400 g Glasfasern von 3 mm Länge, 40 g Polyethylenoxid, 40 g Milchsäure und 40 g Carboxymethylcellulose gegeben. Die Knetung wird nun 100 Minuten weitergeführt. Dann werden nochmals 300 ml einer 15%igen wäßrigen Ammoniaklösung und 14 g Ethanolamin zugegeben. Dann wird die Knetung 1 Stunde weitergeführt. Die so erhaltene Masse wird nach zweitägigem Lagern zu monolithischen Wabenkörpern mit Kanälen von quadratischem Querschnitt mit 5,7 mm Kantenlänge und 1 mm Stegbreite extrudiert. Die entstehenden Formkörper werden getrocknet und 4,25 Stunden bei 620 °C calciniert.

1.2 Vergleichskatalysator(zusammensetzung) gemäß Stand der Technik

Analog dem erfindungsgemäßen Beispiel, jedoch mit einer Ammoniummetavanadatlösung ohne Lutexal[®] P, wurde der Vergleichskatalysator hergestellt. Dieses Verfahren entspricht weitgehend dem in DE-A 39 06 136, Seite 5, Vergleichsbeispiel, beschriebenen.

## 2. Testung der hergestellten Katalysatoren

Die oben beschriebenen Katalysatoren wurden mit einem einer Kraftwerkölfeuerung ähnlichen, synthetischen Abgas geprüft. Die Abgaszusammensetzung ist wie folgt:

| | |
|---|---|
| NO | 200 ppm |
| $SO_2$ | 400 ppm |
| $NH_3$ | 240 ppm |
| $O_2$ | 5 Vol% |
| $H_2O$ | 10 Vol% |
| $N_2$ | Rest |

Die Arbeitstemperatur beträgt 380 °C, die Raumgeschwindigkeit (Volumenstrom $m^3$/h Gas bei 380 °C pro Katalysatorvolumen $m^3$) beträgt ca. 8.000 $h^{-1}$.

## 3. Testergebnis

Es wurden folgende Umsätze gemessen:

| Katalysator | % Umsatz NO | % Umsatz $SO_2$ |
|---|---|---|
| erfindungsgemäß | 87,0 | 0,26 |
| Vergleichsbeispiel | 87,8 | 0,64 |

Während also der NO-Umsatz praktisch erhalten bleibt, geht der $SO_2$-Umsatz mit dem erfindungsgemäßen Verfahren um 60% seines Wertes im Vergleichsbeispiel zurück.

Die Analyse der Porengrößen in den Katalysatoren zeigt, daß im erfindungsgemäßen Katalysator zwei Porengrößenpopulationen, nämlich 10 bis 30 nm und 50 bis 100, vorkommen, während im Vergleichskatalysator nur Poren von 10 bis 40 nm vorkommen. Das Vanadiumpentoxid ist im erfindungsgemäßen Katalysator praktisch ausschließlich in den großen Poren angesiedelt.

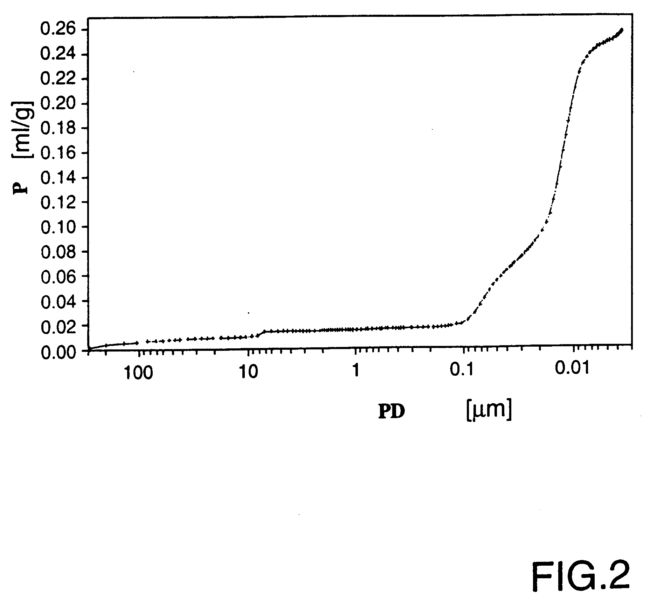

Fig. 1 gibt die differentielle und Fig. 2 die integrierte Verteilungskurve der Porendurchmesser des erfindungsgemäßen Katalysators wieder. Hieraus ist deutlich die Bimodalität der Porenverteilung von 10 bis 30 und 50 bis 100 nm zu sehen. In Fig. 3 ist die Porenverteilung eines weiteren Vergleichskatalysators angegeben, der mit 2,5% Einsatz von Lutexal[®] P hergestellt wurde, bei sonst gleicher Rezeptur. Es ist deutlich zu erkennen, daß alle Poren unter 30 nm liegen, eine Bimodalität praktisch nicht vorhanden ist. Der $SO_2$-Umsatz lag um den Faktor 1,76 höher und wurde zu 0,46 statt 0,26 gemessen.

## Patentansprüche

1. Katalysatorzusammensetzung zur Reduktion von $NO_x$ bei gleichzeitiger weitgehender Vermeidung der Oxidation von $SO_x$ in einem sauerstoffhaltigen Verbrennungsabgas, die $TiO_2$ und $WO_3$ und $V_2O_5$ enthält, die eine zumindest bimodale Porengrößenverteilung in den Bereichen von 5 bis 30 nm und 45 bis 100 nm aufweist, und in der das $V_2O_5$ überwiegend auf die größeren Poren der zumindest bimodalen Porengrößenverteilung verteilt ist.

2. Katalysatorzusammensetzung nach Anspruch 1, dadurch gekennzeichnet, daß die Porengrößenverteilung in den Bereichen von 10 bis 30 nm und 50 bis 100 nm liegt.

**3.** Katalysatorzusammensetzung nach Anspruch 1 oder 2, dadurch gekennzeichnet, daß das $V_2O_5$ zu mindestens 60%, bevorzugt zu 70%, besonders bevorzugt zu 85% oder mehr, auf die größeren Poren der bimodalen Porengrößenverteilung verteilt ist.

**4.** Katalysatorzusammensetzung nach einem der Ansprüche 1 bis 3, dadurch gekennzeichnet, daß zusätzlich Mo, Fe, Sn, Mn, Cu, Co, Cr, Zn, Ce in Form der Oxide oder eine Kombination dieser Oxide in der Katalysatorzusammensetzung enthalten ist.

**5.** Katalysatorzusammensetzung nach einem der Ansprüche 1 bis 4, dadurch gekennzeichnet, daß das $TiO_2$ teilweise durch die Oxide von Si, Al, Zr und/oder Mg ersetzt ist.

**6.** Katalysatorzusammensetzung nach einem der Ansprüche 1 bis 5, dadurch gekennzeichnet, daß zusätzlich Zusatzstoffe zur Gerüstbildung wie Ton, insbesondere alkalifreier Ton, Schichtsilikate wie Montmorillonit oder Kaolin, Porzellanerde, Fuller-Erde, Bentonit und/oder Pyrophillit, und/oder Zusatzstoffe zur Stabilitätsverbesserung wie Glasfasern, mineralische Fasern und/oder Steinwolle enthalten sind.

**7.** Katalysatorzusammensetzung nach Anspruch 6, dadurch gekennzeichnet, daß hierin enthalten sind:

> 75 bis 85 Gew.-% $TiO_2$,
> 3 bis 15 Gew.-% $WO_3$,
> 2 bis 8 Gew.-% Glasfasern,
> 2 bis 10 Gew.-% Ton und 0,1 bis 5 Gew.-% $V_2O_5$.

**8.** Verfahren zur Herstellung einer Katalysatorzusammensetzung nach einem der Ansprüche 1 bis 7 mit den Schritten:

> a) Kneten/Vermischen des $TiO_2$, $WO_3$ und gegebenenfalls von Zusatzstoffen,
> b) Lösen des $V_2O_5$ oder einer Vorläuferverbindung in einem Lösungsmittel,
> c) Versetzen der so erhaltenen Lösung mit einem organischen Polymeren,
> d) Vermischen der mit dem Polymeren versetzten Lösung aus c) mit dem Gemisch aus a) oder den Einzelkomponenten aus a),
> e) Formen der so erhaltenen Masse, Trocknen und Calcinieren,

dadurch gekennzeichnet, das 3,5 bis 8 Gew.-% des organischen Polymeren, bezogen auf die Menge an mineralischen Anteilen, eingesetzt werden.

**9.** Verfahren nach Anspruch 8, dadurch gekennzeichnet, das im Schritt c) $NH_4VO_3$ (Ammoniummetavanadat) mit der mehrfachen Menge des organischen Polymeren vermischt wird, das mit Wasser vorgequollen worden ist.

**10.** Verfahren nach Anspruch 8 oder 9, dadurch gekennzeichnet, daß das organische Polymer ein stark quellendes Acrylatharz, insbesondere eine teilweise neutralisierte vernetzte Polyacrylsäure, insbesondere ein Ammoniumpolyacrylat ist.

**11.** Verfahren nach einem der Ansprüche 8 bis 10, dadurch gekennzeichnet, daß als Zusatzstoffe Gleitmittel zur Extrusionsverbesserung, insbesondere Polyethylenoxid, Polyethylenglykole verschiedener Molekulargewichte, Polyacrylate, Polyvinylalkohol, Polyvinylacetat, Carboxymethylcellulose (CMC), Alkydharze, Harnstoff-Harze, Melamin-Harze und/oder Phenolharze sowie deren Mischungen oder Mischkondensationsprodukte eingesetzt werden.

**12.** Verfahren nach einem der Ansprüche 8 bis 11, dadurch gekennzeichnet, das 4 bis 6 Gew.-% des organischen Polymeren eingesetzt werden.

**13.** Verfahren zur Reduktion von $NO_x$ in einem sauerstoffhaltigen Verbrennungsabgas bei gleichzeitiger weitgehender Vermeidung der Oxidation von $SO_x$, in dem das Verbrennungsabgas mit Ammoniak versetzt wird, das so erhaltene Gemisch mit einer Katalysatorzusammensetzung nach einem der Ansprüche 1 bis 7 in Kontakt gebracht wird, und das Verbrennungsgas mit reduziertem $NO_x$-Gehalt von der Katalysatorzusammensetzung entfernt wird.

**14.** Katalysatorzusammensetzung nach einem der Ansprüche 1 bis 7 erhältlich nach einem der Ansprüche 8 bis 12.

FIG.1

FIG.2

FIG.3

1 μm

FIG.4

10 nm

FIG.5